# DEMANDE DE BREVET EUROPEEN

(11) **EP 3 744 413 A1**
(43) Date de publication de la demande: **02.12.2020**
(21) Numéro de dépôt: 20176408.1
(22) Date de dépôt: 26.05.2020
(51) Int. Cl.: B01D 29/23, B01D 29/52, B01D 29/96, B01D 46/00, B01D 46/12, B01D 46/30

(54) **ELEMENT DE FILTRATION POUR FILTRER DU GAZ OU DU LIQUIDE**

(30) Priorité: 27.05.2019 FR 1905597
(71) Demandeur: Callens, Patrice, 22590 Pordic (FR)
(72) Inventeur: Callens, Patrice, 22590 Pordic (FR)
(74) Mandataire: Cabinet Le Guen Maillet

(57) **Abrégé**

La présente invention se rapporte à un élément (100) de filtration pour filtrer du gaz ou pour filtrer du liquide. Selon l'invention, l'élément de filtration (100) comprend une plaque (Pq) traversée d'une pluralité de passages (Ps) répartis régulièrement dans ladite plaque, une pluralité de cartouches filtrantes (Cf) montées respectivement dans les passages (Ps).

Chaque cartouche filtrante (Cf) comprend une alvéole (Av) contenant un substrat de filtration (Sf), ladite alvéole étant montée dans un passage (Ps) correspondant, ladite alvéole étant pourvue d'une ouverture (Ov) de remplissage bordée d'un rebord (Rb) périmétrique et qui est recouvert par un opercule (Op), le rebord étant appliqué sur une face de ladite plaque (Pq).

Grâce à cette construction, il est possible de concevoir, à la carte, un élément de filtration d'un type particulier en choisissant les dimensions de la plaque, les dimensions des passages et leur espacement, le volume des cartouches de filtration et leur contenu.

La fabrication de l'élément de filtration peut facilement être automatisée. On fabrique les cartouches filtrantes, puis on les enfonce dans les passages.

## Description

La présente invention concerne un élément de filtration pour filtrer du gaz ou du liquide.

De nombreux types de filtres à gaz sont conçus pour répondre à des besoins spécifiques. Ils peuvent ainsi présenter des géométries prismatiques ou cylindriques et de dimensions variées.

Parmi les filtres à gaz, il existe des cellules filtrantes prismatiques destinées à filtrer de l'air dans des installations de climatisation. Une telle cellule filtrante incorpore des éléments de filtration plissés destinés à augmenter la surface de filtration dans un encombrement imposé.

La norme EN 779 : 2012 définit la classe de filtration d'un filtre à air (G1-G4: grossier; M5-M6 : moyen ; F7-F9 : fin ; E10-E12 EPA : pour filtre à haute efficacité; H13-H14 HEPA : pour filtre à très haute efficacité ; U16-U17 ULPA : pour filtre à très faible pénétration). On choisit ainsi un type particulier de substrats filtrants pour fabriquer un filtre d'une classe particulière : fibres de verre, fibres synthétiques, coton électrostatique, charbon actif, textile non tissé, etc...

Il existe aussi des filtres pour liquide, par exemple dans le domaine de l'aquariophilie et qui se composent d'une cartouche de filtration incluant un substrat de filtration. La cartouche de filtration est raccordée dans le circuit de circulation d'eau dans l'aquarium. La cartouche de filtration inclut, par exemple, du charbon, de la zéolite.

Aussi, on trouve sur le marché une très grande variété de filtres de dimensions et de classes différentes et qu'il convient de maintenir en stock pour répondre rapidement à la demande de la clientèle pour remplacer périodiquement des filtres.

Partant de ce constat, le demandeur de la présente invention a cherché à concevoir un élément de filtration pour gaz ou pour liquide et qui puisse simplifier la conception d'une gamme de filtres.

A cet effet, est proposé un élément de filtration pour filtrer du gaz ou pour filtrer du liquide ; selon l'invention, l'élément de filtration comprend une plaque traversée d'une pluralité de passages répartis régulièrement dans ladite plaque, une pluralité de cartouches filtrantes étant montées respectivement dans les passages.

Grâce à cette construction, il est possible de concevoir, à la carte, un élément de filtration d'un type particulier en choisissant les dimensions de la plaque, les dimensions des passages et leur espacement, le volume des cartouches de filtration et leur contenu.

Selon une caractéristique additionnelle de l'invention, chaque cartouche filtrante comprend une alvéole contenant un substrat de filtration, ladite alvéole étant montée dans un passage correspondant, ladite alvéole étant pourvue d'une ouverture de remplissage bordée d'un rebord périmétrique et qui est recouvert par un opercule, le rebord étant appliqué sur une face de ladite plaque.

La fabrication de l'élément de filtration peut ainsi facilement être automatisée. On fabrique les cartouches filtrantes, puis on les enfonce dans les passages.

Selon une caractéristique additionnelle de l'invention, un film adhésif double face est interposé entre le rebord et la face de la plaque.

Les cartouches filtrantes demeures ainsi inamovibles.

Selon une caractéristique additionnelle de l'invention, l'élément de filtration est pourvu d'une seconde plaque traversée d'une pluralité de passages répartis régulièrement dans ladite plaque, les alvéoles étant montées et tenues dans la première plaque ainsi que dans la seconde plaque.

Les cartouches filtrantes demeurent parfaitement stables dans les deux plaques.

Selon une caractéristique additionnelle de l'invention, au moins une cartouche de filtration contient un premier type de substrat de filtration et au moins une seconde cartouche de filtration contient un second type de substrat de filtration.

On peut ainsi concevoir un élément de filtration possédant un pouvoir de filtration hydrophobe et oléophile.

Selon une caractéristique additionnelle de l'invention, la plaque est fabriquée en carton alvéolaire ou dans une feuille de plastique alvéolaire.

Le premier matériau convient pour filtrer du gaz et le second matériau convient pour filtrer du liquide.

Un filtre fait également partie de l'invention. Il incorpore au moins un élément de filtration tel que décrit ci-avant.

On peut concevoir facilement à la demande un tel filtre ou bien livrer en kit les constituants des éléments de filtration pour fabriquer un tel filtre.

Un procédé de fabrication d'un élément de filtration tel que décrit ci-avant fait encore partie de l'invention. Le procédé consiste à découper, en les répartissant régulièrement, des passages dans la plaque et à monter respectivement des cartouches de filtration dans lesdits passages.

La fabrication d'un élément de filtration devient ainsi relativement facile à mettre en œuvre.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] représente une vue éclatée en perspective d'un élément de filtration pour gaz ou pour liquide selon l'invention,
[Fig. 2] représente une vue en coupe d'une cellule de filtration incorporant des éléments de filtration pour filtrer de l'air selon l'invention,
[Fig. 3] représente une vue en coupe d'un filtre à liquide incorporant deux éléments de filtration disposés en vis-à-vis et qui sont imbriqués mutuellement selon l'invention et,
[Fig. 4] représente une vue de face en coupe d'une variante de réalisation d'un élément de filtration pour gaz selon l'invention.

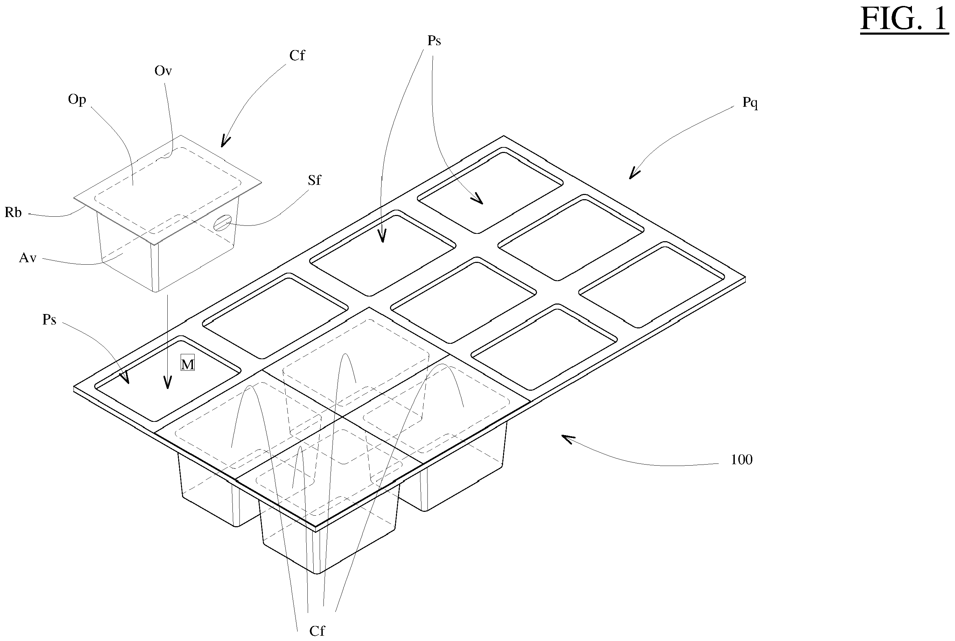

L'élément de filtration 100 présenté sur la Fig. 1 est destiné à mettre en œuvre la filtration d'un gaz, par exemple de l'air dans une installation de chauffage, de ventilation ou de climatisation ou pour mettre en œuvre la filtration d'un liquide, par exemple une eau chargée d'impuretés.

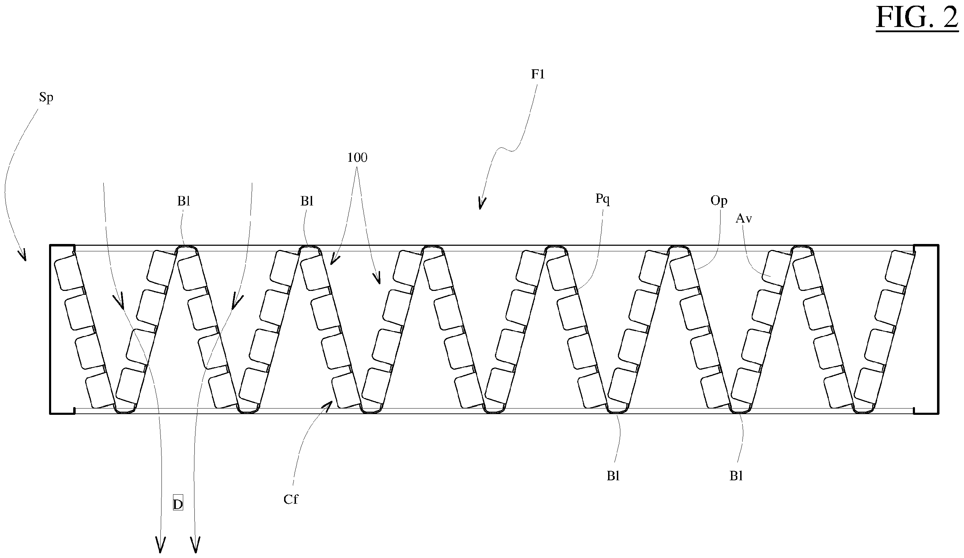

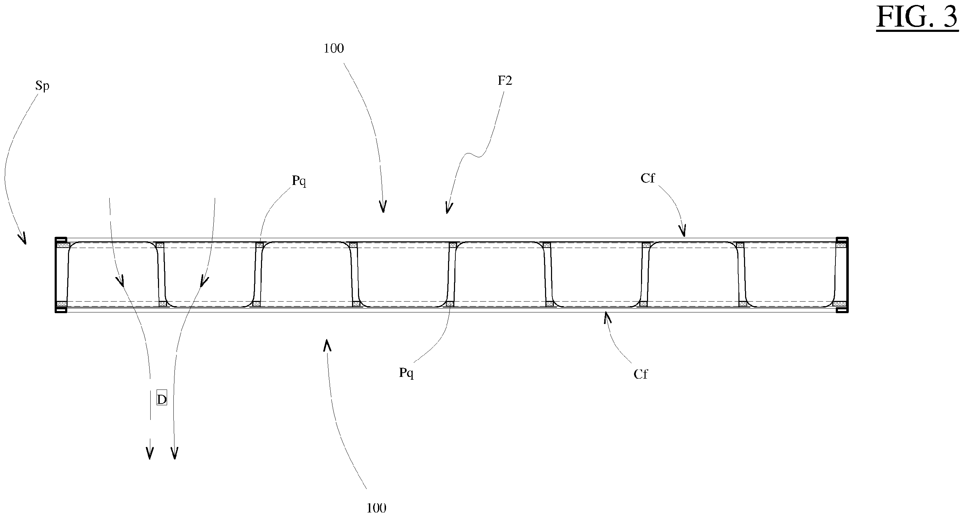

Il convient de monter l'élément de filtration 100 dans un support de filtre Sp constitutif d'un filtre à gaz ou d'un filtre à liquide, comme ceux présentés sur les Figs. 2 et 3 avec les références F1 et F2. En fonctionnement, le gaz ou le liquide, qu'il convient de filtrer, doit passer au travers du filtre sous l'effet d'une surpression ou d'une dépression, créée entre l'amont et l'aval dudit filtre. Les flèches D indiquent le passage du gaz ou du liquide traversant les filtres F1 et F2.

L'élément de filtration 100 se compose, sur la Fig. 1, d'une plaque Pq traversée d'une pluralité de passages Ps, d'une pluralité de cartouches de filtration Cf et qui sont destinées à être montées respectivement dans les passages Ps.

Sur cette Fig. 1, quatre cartouches de filtration Cf sont respectivement montées dans quatre passages Ps correspondants. La flèche M indique la direction de montage d'une cartouche de filtration Cf dans un passage Ps.

La paroi constitutive de la plaque Pq est étanche aux gaz et aux liquides.

La plaque Pq est plane.

La plaque Pq est fabriquée en carton pour une utilisation de l'élément 100 dans le domaine de la filtration de gaz, un environnement non humide. Le carton présente l'avantage d'être une matière considérée comme relativement facile à incinérer.

La plaque Pq peut également être fabriquée dans une feuille de matière plastique telle qu'une feuille de matière alvéolaire, pour des applications dans le domaine de la filtration des gaz ou des liquides.

La plaque Pq peut aussi être fabriquée dans une plaque de tôle en acier inoxydable, pour des applications dans le domaine agro-alimentaire.

Elle peut encore être fabriquée dans un textile non-tissé pour des applications dans le domaine de la filtration de l'eau dans les aquariums grand public.

Les passages Ps sont répartis de manière régulière dans la plaque Pq, par exemple sous la forme de rangées. Chaque passage Ps présente, sur cette Fig. 1, une section pratiquement rectangulaire.

La cartouche de filtration Cf est constituée d'une alvéole Av contenant un substrat de filtration Sf. L'alvéole Av dispose d'une ouverture Ov de remplissage qui est bordée tout autour d'un rebord Rb plan. La section de l'alvéole Av présente préférentiellement une géométrie polygonale qui est rectangulaire sur cette Fig. 1 pour maximiser le volume de l'alvéole au regard de son encombrement.

L'ouverture Ov est refermée par l'intermédiaire d'un opercule Op. Le périmètre de l'opercule Op déborde du périmètre de l'ouverture Ov pour recouvrir pratiquement le rebord Rb. Le périmètre du rebord Rb et de l'opercule Op présentent préférentiellement une géométrie polygonale et qui est rectangulaire sur cette Fig. 1.

Le substrat Sf remplit complètement la cartouche filtrante Cf. Lorsque l'alvéole Av est remplie, l'opercule Op est scellé sur le périmètre du rebord Rb entourant l'ouverture Ov de l'alvéole Av. Le substrat Sf est suffisamment tassé pour éviter qu'il ne se déplace à l'intérieur de l'alvéole Av.

L'alvéole Av ainsi que l'opercule Op sont fabriqués dans un matériau perméable à l'air. Ils sont avantageusement fabriqués en fibres de polyester non tissées. L'alvéole Av est rapportée sur l'opercule Op par une soudure, par exemple une soudure par ultrasons ou par collage. L'alvéole Av présente en section et sur cette Fig. 1, une géométrie pratiquement rectangulaire adaptée à être logée avec un serrage minimum dans un passage Ps correspondant, d'une part, pour éviter le retrait de la cartouche de filtration Cf de la plaque Pq, pendant le fonctionnement du filtre et, d'autre part, pour que la liaison entre l'alvéole Av et le passage Ps demeure étanche.

Compte tenu de la présence d'une faible pente de démoulage sur chacune des parois de l'alvéole Av, la section qui se monte avec un serrage étanche dans le passage est considérée à proximité dudit rebord. Lorsque l'alvéole Av est montée dans le passage Ps, le rebord Rb entourant l'ouverture Ov repose sur une face de la plaque Pq.

Pour éviter impérativement un déboîtage de la cartouche de filtration Cf, on peut interposer un film adhésif à double face, non représenté, entre le rebord Rb de la cartouche filtrante Cf et la face de la plaque Pq et qui est tournée vers ledit rebord.

L'espacement des passages Ps et les dimensions des rebords Rb sont tels que les rebords Rb sont pratiquement jointifs quand les cartouches filtrantes Cf sont montées dans leurs passages Ps respectifs, comme cela apparaît sur cette Fig. 1. L'élément de filtration 100 présente ainsi un aspect pratiquement lisse.

Dans une première variante de réalisation non représentée, les cartouches de filtration sont collées par leurs rebords sur la plaque.

Dans une seconde variante de réalisation non représentée, les cartouches de filtration sont soudées par leurs rebords sur la plaque.

La contenance de chaque cartouche de filtration est choisie préférentiellement dans la gamme suivante : 0.5 gramme, 5 grammes, 10 grammes, 50 grammes. Les dimensions de l'alvéole Av : section (longueur, largeur) et hauteur sont adaptées en conséquence.

Le substrat de filtration Sf est constitué, par exemple, de fibres de verre, de fibres synthétiques, de coton électrostatique, de charbon actif, de textile non tissé, de zéolite, de résine échangeuse d'ions, de divers produits séparateurs tels que des copeaux de bois, des agents synthétiques super-absorbeurs.

Le substrat Sf de filtration peut également contenir un mélange d'au moins deux de ces matériaux.

Préférentiellement, la plaque Pq présente une couleur particulière en relation avec la nature du contenu des cartouches de filtration Cf. La plaque Pq peut ainsi présenter une couleur noire pour des cartouches de filtration Cf contenant du charbon actif type 50, une couleur blanche pour du charbon actif type 70, une couleur verte pour du zéolite, etc.

La plaque Pq peut encore être recouverte d'un marquage sérigraphié présentant, par exemple, le nom ou le logo d'un client.

Il est possible de concevoir un élément de filtration 100 en combinant au moins une première cartouche de filtration Cf contenant un premier type de substrat de filtration Sf avec au moins une seconde cartouche de filtration Cf contenant un second type de substrat de filtration Sf, pour accroître le champ des possibilités de filtration de l'élément de filtration 100. On peut ainsi concevoir un élément de filtration hydrophobe et oléophile pour retirer la partie en huile d'un liquide.

Pour concevoir un filtre avec des dimensions et des exigences de filtration particulières, on détermine la géométrie de la plaque Pq, le patron des découpes des passages Ps dans la plaque Pq, le volume et la section des cartouches de filtration Cf, la nature du ou des substrats de filtration Sf.

On remplit les alvéoles Av avec le(s) substrat(s) de filtration Sf, puis on les scelle à l'aide d'opercules Op. On découpe les passages Ps, par exemple à l'aide d'une poinçonneuse équipée d'emportes-pièces, puis on emboîte les alvéoles Av dans lesdits passages. On les colle ou on les soude le cas échéant. L'élément de filtration 100 ainsi construit est ensuite utilisé, seul ou avec d'autres, dans la fabrication d'un filtre. L'élément de filtration 100 peut facilement être fabriqué de manière industrielle.

Sur la Fig. 2, est présenté un filtre F1 incluant une pluralité d'éléments de filtration 100. Le filtre F1 est une cellule de filtration pour filtrer de l'air dans une installation de conditionnement d'air, pour mettre en œuvre le chauffage, la ventilation ou la climatisation de locaux. Le filtre F1 est représenté à plat. Les éléments de filtration 100 sont montés et fixés dans un support Sp constitutif du filtre F1. Le support Sp est ici constitué d'un cadre qui se compose d'une pluralité de parois planes qui s'étendent verticalement et dont la hauteur est un peu plus petite que la longueur de chacun des éléments de filtration 100. Les éléments de filtration 100 se succèdent en étant reliés deux à deux par l'intermédiaire d'une bande de liaison étanche Bl. Les éléments de filtration 100 sont disposés en zig-zag dans la hauteur du cadre Sp pour accroître leur surface de filtration.

Les parois planes verticales du support Sp sont bordées perpendiculairement sur leur bord supérieur et sur leur bord inférieur par deux rebords qui s'étendent vers l'intérieur du filtre F1.

Les extrémités latérales des éléments de filtration 100 sont fixées de manière étanche entre deux parois opposées constitutives du cadre Sp et les rebords.

L'arrangement et la disposition des éléments de filtration 100 sont les suivants :

Les éléments de filtration 100 sont disposés de telle sorte que les opercules Op d'un premier élément de filtration 100 sont tournés en vis-à-vis des alvéoles Av de l'élément de filtration 100 suivant, pour optimiser l'espace disponible dans le filtre F1 afin de le remplir avec un nombre maximum d'éléments de filtration 100.

Sur la Fig. 3, est présenté un filtre F2 incluant une pluralité d'éléments de filtration 100. Le filtre F2 est un filtre à liquide. Il est destiné par exemple à filtrer en continu les impuretés qui se forment dans de l'eau contenue dans un aquarium. Le support Sp est ici encore un cadre constitué d'une pluralité de parois planes qui s'étendent verticalement et qui sont bordées perpendiculairement sur leur bord supérieur et sur leur bord inférieur par deux rebords qui s'étendent vers l'intérieur du filtre F2.

L'arrangement et la disposition des éléments de filtration 100 sont les suivants :
Deux éléments de filtration 100 sont disposés horizontalement dans le cadre Sp. Ils sont disposés en vis-à-vis et en étant imbriqués mutuellement. La distance séparant deux rangées de cartouches de filtration Cf, dans chaque élément de filtration 100, est plus grande que la largeur des cartouches de filtration Cf, permettant ainsi une imbrication mutuelle par rapprochement des deux éléments de filtration 100 tournés en vis-à-vis. Les cartouches de filtration Cf des deux éléments de filtration 100 sont proches par leurs bords latéraux. On obtient ainsi une densité importante de cartouches de filtration par unité de volume. D'autres passages peuvent être créés au travers des deux plaques Pq pour réceptionner les fonds des alvéoles Av afin de réduire au maximum l'épaisseur du filtre F2.

La hauteur des parois verticales est un peu plus grande que l'épaisseur des deux éléments de filtration 100 imbriqués.

Les bords latéraux des éléments de filtration 100 sont fixés de manière étanche entre les parois constitutives du cadre Sp.

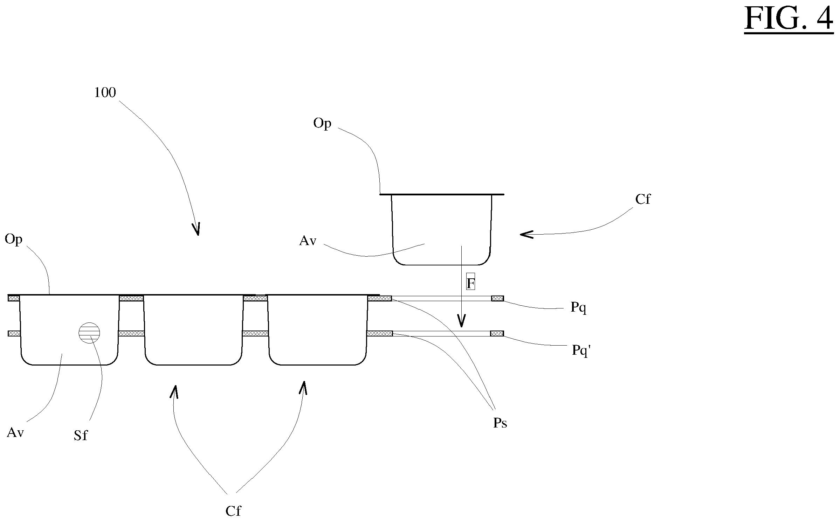

Sur la Fig. 4, une seconde plaque Pq' traversée de passages Ps répartis régulièrement à l'instar de la plaque Pq est utilisée pour caler mutuellement et à une hauteur différente, les alvéoles Av des différentes cartouches de filtration Cf. La section de chaque passage Ps de la plaque Pq' peut être un peu réduite par rapport à la section de chaque passage Ps de la plaque Pq pour tenir compte de la géométrie en tronc de pyramide des parois de l'alvéole Av afin d'obtenir également un serrage de l'alvéole Av dans la plaque Pq'.

Les alvéoles Av sont ainsi logées pratiquement à mi-hauteur dans les passages Ps de cette seconde plaque Pq'. La stabilité des cartouches Cf est accrue quand elles sont tenues dans ces deux plaques Pq et Pq' constitutives de l'élément de filtration 100.

## Revendications

1. Élément (100) de filtration pour filtrer du gaz ou pour filtrer du liquide, l'élément (100) de filtration comprenant une plaque (Pq) traversée d'une pluralité de passages (Ps) répartis régulièrement dans ladite plaque, une pluralité de cartouches filtrantes (Cf) étant montées respectivement dans les passages (Ps), **caractérisé en ce que** chaque cartouche filtrante (Cf) comprend une alvéole (Av) contenant un substrat de filtration (Sf), ladite alvéole étant montée dans un passage (Ps) correspondant, ladite alvéole étant pourvue d'une ouverture (Ov) de remplissage bordée d'un rebord (Rb) périmétrique et qui est recouvert par un opercule (Op), le rebord étant appliqué sur une face de ladite plaque (Pq).

2. Élément de filtration (100) selon la revendication 1, **caractérisé en ce qu'**un film adhésif double face est interposé entre le rebord et la face de la plaque (Pq).

3. Élément de filtration (100) selon la revendication 1 ou 2, **caractérisé en ce qu'**il est pourvu d'une seconde plaque (Pq') traversée d'une pluralité de passages (Ps) répartis régulièrement dans ladite plaque, les alvéoles étant montées et tenues dans la première plaque (Pq) ainsi que dans la seconde plaque (Pq').

4. Élément de filtration (100) selon l'une quelconque des revendications 1, 2 ou 3, **caractérisé en ce qu'**au moins une cartouche de filtration (Cf) contient un premier type de substrat de filtration (Sf) et **en ce qu'**au moins une seconde cartouche de filtration (Cf) contient un second type de substrat de filtration (Sf).

5. Élément de filtration (100) selon l'une quelconque des revendications 3 ou 4, **caractérisé en ce que** la plaque (Pq) est fabriquée en carton alvéolaire ou dans une feuille de plastique alvéolaire.

6. Filtre (F1, F2) destiné à filtrer un gaz ou un liquide, **caractérisé en ce qu'**il incorpore au moins un élément de filtration (100) selon l'une quelconque des revendications précédentes.

7. Procédé de fabrication d'un élément (100) de filtration selon l'une quelconque des revendications 1 à 5, **caractérisé en ce qu'**il consiste à découper, en les répartissant régulièrement, des passages (Ps) dans la plaque (Pq) et à monter respectivement des cartouches de filtration (Cf) dans lesdits passages (Ps).
